# EUROPEAN PATENT SPECIFICATION

(11) **EP 1 158 686 B1**
(45) Date of publication and mention of the grant of the patent: **04.07.2007**
(21) Application number: 00111111.1
(22) Date of filing: 23.05.2000
(51) Int. Cl.: H04B 1/52

(54) **Multiband radio system and method for operating a multiband radio system**
Mehrbandfunksystem und Verfahren zum Betrieb eines Mehrbandfunksystems
Système radio multibande et méthode de mise en oeuvre d'un système radio multibande

(43) Date of publication of application: 28.11.2001
(73) Proprietor: Sony Deutschland GmbH, 10785 Berlin (DE)
(72) Inventor: Enderlein, Janos, Advanced Tech. Cent. Stuttgart, 70327 Stuttgart (DE); Kraiem, Besma, Advanced Tech. Cent. Stuttgart, 70327 Stuttgart (DE)
(74) Representative: Müller - Hoffmann & Partner

(56) References cited:
- EP-A- 0 944 175
- GB-A- 2 276 293
- US-A- 5 915 212
- US-A- 6 023 609

## Description

This invention is related to multiband radio systems, in particular to an arrangement for isolation of signals between a receiving and a transmitting branch thereof, and to a method for operating a multiband radio system.

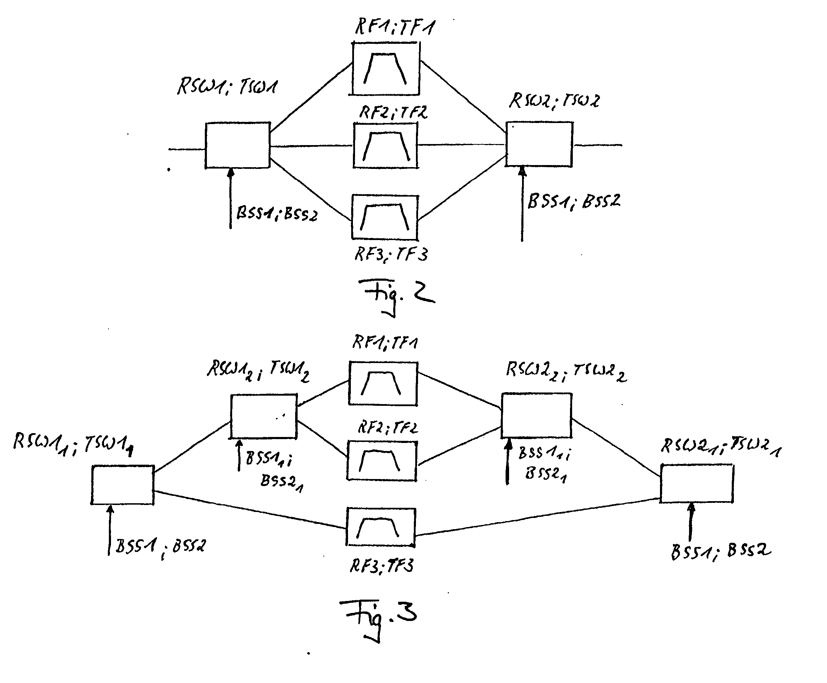

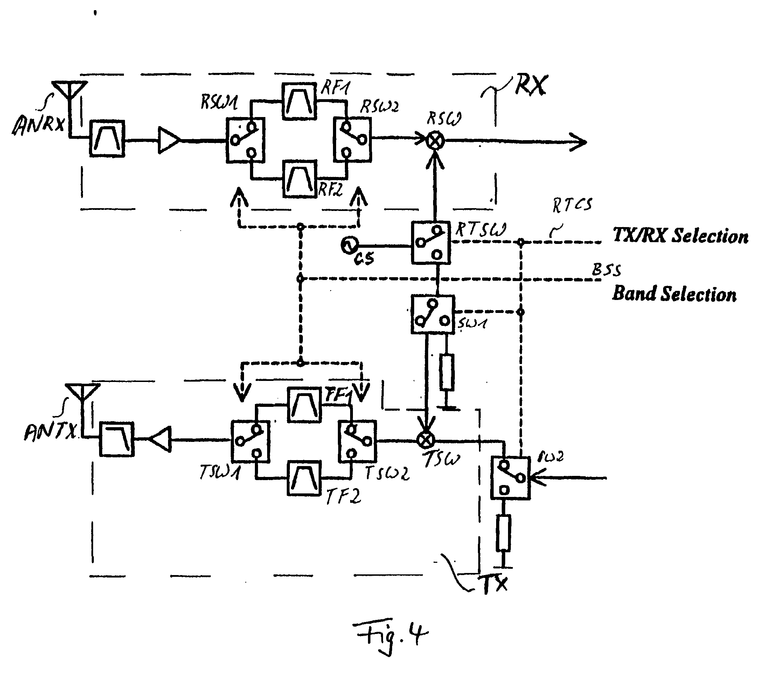

Generally, within a conventional modern Time Division Duplex (TDD) arrangement, as shown in Fig. 4, each of said receiving and transmitting branches comprises at least two selectable radio frequency filters, since more than one frequency band is supported. Within each of said branches said radio frequency filters are arranged in parallel and they are selectable by at least one pair of multiplexer switches. Said radio frequency filters comprise passband functions, whereby, within each of said branches, said passband functions of each of said radio frequency filters are responsible for a given frequency band being different from respective frequency bands of each of the other radio frequency filters. Said pairs of multiplexer switches are actuated by means of a band selection signal. Further, in operation, in both of said receiving and transmitting branches signals pass through radio frequency filters, the properties of which are suited for one and the same frequency band, i.e. the band selection is done by switching discrete band selecting filters 'on' or 'off' the RF signal path of the receiving branch and the transmitting branch. Said receiving branch further comprises a demodulator and said transmitting branch further comprises a modulator for down/up-conversion of the received RF signal to IF and the IF signal to be transmitted to RF on basis of a carrier signal supplied from an oscillator. Said carrier signal is fed from said oscillator to either said demodulator or said modulator via a receive/transmit switch which, in turn, is actuated by a receive/transmit selection or control signal.

Further detail of this conventional arrangement as shown in Fig. 4 will be discussed in detail lateron. Since switches for RF in GHz range have typical isolation values of less than 25 dB, in operating such a TDD arrangement there occurs leakage of the receiving signal from the transmitting branch to the receiving branch via the transmitting antenna of said transmitting branch. However, for high sensitive radio systems, in particular in the high frequency range, such as the HiperLAN2 (H/2) or IEEE802.11 (802.11) the RF leakage has to be less than the RX sensitivity of e.g. -85 dBm.

In order to overcome this leakage in this conventional arrangement, there are provided additional switches to loads via which signals are supplied to the transmitting branch, being activated in the receiving mode of operation of said arrangement which cause a higher attenuation of the signal to be transmitted in the transmitting mode. In particular, the oscillator is switched 'off' (out) from the modulator (mixer) of the transmitting branch and the IF path is switched 'off' (out) from the transmitting branch.

Therefore, this conventional arrangement shows two disadvantages, namely higher cost in production because of said additional switches and unwanted signal attenuation.

A somewhat similar arrangement is disclosed in EP 0 741 463 A2.

A multiband radio system according to the preamble of claim 1 and a method of operating a multiband radio system are disclosed in US-A 6,023,609.

It is an object of this invention to improve said conventional arrangement so that better isolation is achieved at lower cost in production and with no additional attenuation in the transmitting signal path caused by measures for isolation. It is another object of this invention to modify operation of said multiband radio system such that said isolation of signals is improved in the receiving mode.

This object is solved by a Multiband Radio System according to claim 1. Preferred embodiments thereof are defined in claims 2 to 4. The method to operate a Multiband Radio System according to the invention is defined in independent claim 5.

Therewith, a multiband radio system according to the present invention which comprises a receiving branch and a transmitting branch respectively supporting more than one different frequency band. A receiving/ transmitting filter selector controls radio frequency filters included within said receiving branch and said transmitting branch, respectively, in receiving mode so that radio signals of a frequency band which are passed through in the receiving branch are blocked in the transmitting branch.

Further, a method for operating a multiband radio system comprising a receiving branch and a transmitting branch according to the present invention controls radio frequency filters included within said receiving branch and said transmitting branch, respectively, in receiving mode so that radio signals of a frequency band which are passed through in the receiving branch are blocked in the transmitting branch.

Therewith the two disadvantages of the conventional arrangement, namely higher cost in production because of said additional switches and unwanted signal attenuation, are eliminated. In particular, according to the present invention, no unwanted signal attenuation occurs while maintaining less leakage, since the additional switches which are necessary according to the prior art, are obsolete according to the invention.

Additionally to said conventional arrangement described above, this invention provides a receiving/transmitting filter selector being inputted by a receive/transmit control signal and by a primary band selection signal. Secondary band selection signals are outputted and transmitted to said branches. Further, said additional switches of said conventional arrangement switching input signals of the transmitting branch to loads are omitted. Additionally, said multiband radio system is operated in its receiving mode in such a way that signals that like to pass through said filters in both of said branches are blocked in the transmitting branch as both filters through which said signals like to pass through are responsible for different frequency bands, i.e. have passbands in different frequency bands.

The subject matter of the present invention operates in a way that, when being in receiving mode, a filter in said receiving branch responsible for a first frequency band is selected and a filter is selected in said transmitting branch being responsible for a second frequency band being different from said first frequency band. This results in that, when high frequency signals of a first frequency band are received, said high frequency signals cannot interfere with each other, as they are blocked within said transmitting branch so that, in the receiving mode, there occurs almost no leakage between the branches.

Further, it is cheaper in production to provide an arrangement with said receiving/transmitting filter selector rather than to provide several additional switches and loads according to said conventional arrangement.

The present invention will be better understood from the following description of an exemplary embodiment thereof taken in conjunction with the accompanying figures, wherein
- **Fig. 1**: shows parts of a multiband radio system according to a first embodiment of the present invention,
- **Figs. 2 and 3**: show second and third embodiments of the present invention, each of them partially, and
- **Fig. 4**: shows a conventional arrangement.

Fig. 4 shows a conventional arrangement, as briefly discussed in the introductory part of this specification. In the upper half of figure 4 there is shown a receiving branch RX, indicated by dashed lines. Said receiving branch RX comprises, among other elements, first and second radio frequency filters RF1, RF2. Each of said radio frequency filters RF1, RF2 is a stop band filter. Each of these radio frequency filters RF1, RF2 is dedicated to pass through signals being part of a specific frequency band, whereby the frequency band associated with the first radio frequency filter RF1 is different from the frequency band associated with the second radio frequency filter RF2. For example, the filters might support the upper and lower frequency band of H/2 or 802.11a. Said radio frequency filters RF1, RF2 are arranged in parallel to each other. They are separated from each other and selectable by a pair of multiplexer switches RSW1, RSW2.

Within said receiving branch RX there is also arranged a demodulator RSW for downconverting a received and filtered signal into the Intermediate Frequency range. Said demodulator RSW receives a carrier signal output from an oscillator CS via a receive/transmit switch RTSW, which, in turn, is activated by a receive/transmit control signal RTCS. If said receive/transmit control signal RTCS is in the state "receive", then it forces said receive/transmit switch RTSW to pass said carrier signal to the demodulator RSW to allow a received signal to be demodulated to the IF. Otherwise, no demodulation is performed.

Said pair of multiplexer switches RSW1, RSW2 is activated by means of a band selection signal BSS. When said band selection signal BSS is in a first state, the multiplexer switches RSW1, RSW2 are switched into a first state so that a received signal is allowed to pass through said first radio frequency filter RF1 in the receiving branch RX. Otherwise, said multiplexer switches RSW1, RSW2 are switched into a second state so that a received signal is allowed to pass through said second radio frequency filter RF2 in said receiving branch RX.

In parallel to said receiving branch RX there is arranged a transmitting branch TX. It comprises similar elements like the receiving branch RX, as described above: a pair of radio frequency filters TF1, TF2, a pair of multiplexer switches TSW1, TSW2, and a modulator TSW for upconverting a signal to be transmitted form IF to RF (Radio Frequency). The operation of these elements in the transmitting branch TX also corresponds to the operation of the respective elements in the receiving branch RX.

Further, the carrier frequency output from the oscillator CS is fed to the transmitting branch TX via the receive/transmit switch RTSW and a first additional switch SW1, and the IF signal is input to the transmitting branch TX via a second additional switch SW2.

Said band selection signal BSS is, as already explained, fed to each of said multiplexer switches RSW1, RSW2, TSW1, TSW2 in both of said branches RX, TX. Its purpose is to select, in each of said branches RX, TX, an appropriate radio frequency filter (either RF1 and TF1 or RF2 and TF2) according to the selected frequency band, within which a signal is to be received or to be transmitted. To make an example: if a signal within a first frequency band is to be received, all of said multiplexer switches RSW1, RSW2, TSW1, TSW2 are switched into a first position, so that signal paths between the multiplexer switches RSW1 and RSW2 and, respectively, between TSW1 and TSW2 take place via said first radio frequency filters RF1 and TF1. The same occurs in case of transmitting a signal being within said first frequency band. However, if a signal being within a second frequency band is to be received or transmitted, said multiplexer switches RSW1, RSW2, TSW1, TSW2 are switched into a second position, so that signal paths between the multiplexer switches RSW1 and RSW2 and, respectively, between TSW1 and TSW2 take place via said second radio frequency filters RF2 and TF2.

As explained above, between the receiving branch RX and the transmitting branch TX there is arranged a receive/transmit switch RTSW, being actuated by a receive/transmit control signal RTCS. The purpose of said receive/transmit control signal RTCS is to switch, depending on the status of said receive/transmit control signal RTCS, a carrier signal output from the oscillator CS either to said demodulator RSW in the receiving branch RX or to said modulator TSW in the transmitting branch TX. Whereas one of two outputs of said receive/transmit switch RTSW is directly connected to said demodulator RSW in the receiving branch RX, the other output of said receive/transmit switch RTSW is connected to said modulator TSW in the transmitting branch TX via the first additional switch SW1 which is also controlled by the receive/transmit control signal RTCS as well as the second additional switch SW2 which is arranged between said modulator TSW in the transmitting branch TX and the input of the transmitting branch TX, where the signal to be transmitted is fed to the transmitting branch TX.

Operation of and purpose for said two additional switches SW1, SW2 are as follows: each of said two additional switches SW1, SW2 is switchable into a state, where their conducting paths are connected to loads, in Fig. 4 indicated as resistors. The reason for this is that in receiving mode there occurs leakage of a received signal from an antenna ANTX associated with the transmitting branch TX to the receiving branch RX, even though isolation between said branches RX, TX is be very high. To attenuate this leakage, in the receiving mode said two additional switches SW1, SW2 are switched into a state in which their conducting paths are connected to said loads. But it was found that said desired attenuation of leakage is still not enough for achieving a very high isolation between said branches RX, TX. And also, when this conventional arrangement operates in the transmitting mode, the signal to be transmitted (transmission, of course, takes place by means of said transmitting branch TX) is unwantedly attenuated by said second additional switch SW2 and the carrier signal output by the oscillator CS is unwantedly attenuated by said first additional switch SW1.

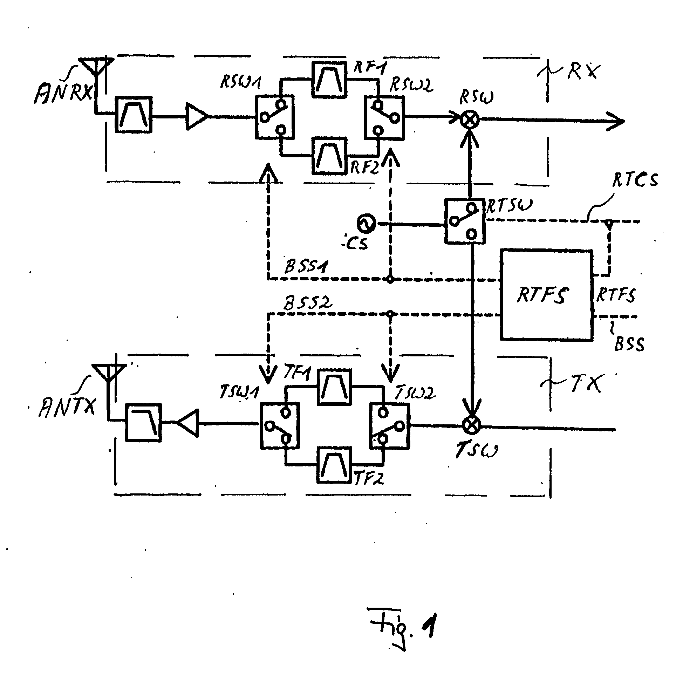

These disadvantages are overcome by an arrangement according to the present invention, as already briefly described. A first embodiment is shown in Fig. 1. The arrangement according to the present invention also comprises a receiving branch RX and a transmitting branch TX identical to the receiving branch RX and transmitting branch TX of the conventional arrangement.

However, according to the present invention the first and second additional switches SW1, SW2 of said conventional arrangement as well as the loads connected thereto are omitted.

A receive/transmit switch RTSW is directly connected between the demodulator RSW of the receiving branch RX, the modulator TSW of the transmitting branch TX, and the oscillator CS outputting the carrier signal, respectively. Said receive/transmit switch RTSW is controlled by a receive/transmit control signal RTCS, just as it is the case with the conventional arrangement. Additionally to said conventional arrangement, the arrangement according to the present invention comprises a receive/transmit filter selector RTFS comprising two inputs. To a first input said receive/transmit control signal RTCS is applied. To a second input a primary band selection signal BSS is applied, which is the same signal as the band selection signal BSS shown in the conventional arrangement. Said receive/transmit filter selector RTFS outputs a first and a second secondary band selection signal BSS1 and BSS2, both of said band selection signals BSS1, BSS2 being derived from said receive/transmit control signal RTCS and from said primary band selection signal BSS. A respective first secondary band selection signal BSS1 is fed to said pair of multiplexer switches RSW1, RSW2 of said receiving branch RX. The second secondary band selection signals BSS2 is fed to said pair of multiplexer switches TSW1, TSW2 of said transmitting branch TX.

The operation of the arrangement according to the present invention is, when being in said receiving state, as follows:

When, in a first case, a signal having a frequency being within a given first frequency band is to be received within said receiving branch RX via an antenna ANRX associated with said receiving branch RX, said receive/transmit filter selector RTFS generates said first secondary band selection signal BSS1 on basis of said receive/transmit control signal RTCS and said primary band selection signal BSS so that said pair of multiplexer switches RSW1, RSW2 in said receiving branch RX are switched into a first position so that the signal received via said antenna ANRX passes through said first radio frequency filter RF1 of said receiving branch RX. This radio frequency filter RF1 has a passband function adjusted to said first frequency band.

At the same time, said receive/transmit filter selector RTFS generates said second secondary band selection signal BSS2 on basis of said receive/transmit control signal RTCS and said primary band selection signal BSS so that said pair of multiplexer switches TSW1, TSW2 in said transmitting branch TX are switched into a second position so that there is a kind of signal path through said second radio frequency filter TF2 of said transmitting branch TX. Said second radio frequency filter TF2 also has a passband function adjusted to a second frequency band different to said first frequency band, therefore it has a stop band function at said first frequency band.

Therefore, when the arrangement according to the present invention is operated in the receiving mode and if said signal to be received by said receiving branch RX via said antenna ANRX also would be received by said transmitting branch TX via said antenna ANTX associated with said transmitting branch TX, said signal cannot pass through said transmitting branch TX and thereby causing leakage to said receiving branch RX via the modulator TSW and the demodulator RSW and said receive/transmit switch RTSW, because it is blocked by said second radio frequency filter TF2, as said second radio frequency filter TF2 has a stop band function, which does not fit with the frequency band of the signal received.

It is easy to understand that, in a second case, if within the receiving branch RX a signal is to be received, the frequency of which being within the range of a second frequency band, the pair of multiplexer switches RSW1, RSW2 in the receiving branch RX is switched by said first secondary band selection signal BSS1 in such a way, that the signal passes through said second radio frequency filter RF2, which is responsible for said second frequency band. At the same time, said pair of multiplexer switches TSW1, TSW2 within said transmitting branch TX is switched by said second secondary band selection signal BSS2 into a state where a connection between these multiplexer switches TSW1, TSW2 is accomplished via said first radio frequency filter TF1 of said transmitting branch TX. The effect achieved by this is the same as achieved within the previous described example: The signal to be received by the receiving branch RX is received and fed through said receiving branch RX, whereby, when this one and the same signal is also received by said transmitting branch TX (via its associated antenna ANTX), this signal is blocked within said first radio frequency filter TF1 of said branch RX by (said) appropriate switching of said multiplexer switches TSW1, TSW2 of said transmitting branch TX.

Fig. 2 shows, partially, a second embodiment of the present invention. The elements shown in Fig. 2 may be arranged either within said receiving branch RX or within said transmitting branch TX. This is demonstrated by using reference symbols being associated either with said receiving branch RX or with said transmitting branch TX, separated from each other by a semicolon, respectively. Fig. 2 shows the combination of a pair of multiplexer switches RSW1, RSW2 (or: TSW1, TSW2, respectively) with a set of three radio frequency filters RF1, RF2, RF3 (or: TF1, TF2, TF3, respectively). Each of said multiplexer switches RSW1, RSW2 (or: TSW1, TSW2, respectively) is actuated by one and the same of a respective one of said secondary band selection signals BSS1, BSS2. Each of said secondary band selection signals BSS1, BSS2 comprises information about which of said radio frequency filters RF1, RF2, RF3 (or: TF1, TF2, TF3, respectively) has to be switched between said set of multiplexer switches RSW1, RSW2 (or: TSW1, TSW2, respectively). The further operation of this second embodiment is just as it is with the first embodiment, already described, i.e. in the receiving state a radio frequency filter TF1, TF2, TF3 is selected to be switched into the transmitting path of the transmitting branch TX with a different passband than that of the radio frequency filter RF1, RF2, RF3 selected to be switched into the transmitting path of the receiving branch RX.

Fig. 3 shows, partially, a third embodiment of the present invention. The elements shown in Fig. 3 may be arranged either within said receiving branch RX or within said transmitting branch TX. This is demonstrated by using reference symbols being associated either with said receiving branch RX or with said transmitting branch TX, separated from each other by a semicolon, resspectively. Fig. 3 shows the combination of two pairs of multiplexer switches RSW1₁, RSW1₂, RSW2₁, RSW2₂, (or: TSW1₁, TSW1₂, TSW2₁, TSW2₂, respectively) with a set of three radio frequency filters RF1, RF2, RF3 (or: TF1, TF2, TF3, respectively). Additionally to said secondary band selection signals BSS1, BSS2 there is provided an additional pair of secondary band selection signals BSS1₁, BSS2₁, also being generated by said receive/transmit filter selector RTFS. Each pair of said multiplexer switches RSW1₁, RSW1₂, RSW2₁, RSW2₂, (or: TSW1₁, TSW1₂, TSW2₁, TSW2₂, respectively) is actuated either by one and the same of a respective one of said secondary band selection signals BSS1, BSS2 or by one of said additional pair of secondary band selection signals BSS1₁, BSS2₁. Each of said secondary band selection signals BSS1, BSS2, BSS1₁, BSS2₁ comprises information about which of said radio frequency filters RF1, RF2, RF3 (or: TF1, TF2, TF3, respectively) has to be switched between said set of multiplexer switches RSW1₁, RSW1₂, RSW2₁, RSW2₂, (or: TSW1₁, TSW1₂, TSW2₁, TSW2₂, respectively). The further operation of this third embodiment is just as it is with the first and second embodiments, already described.

In this manner it is possible to design also multiband radio systems with more that three radio frequency filters in the receiving branch RX and the transmitting branch TX, respectively.

Furthermore, a high frequency multiband radio system according to the present invention which comprises a receiving branch RX and a transmitting branch TX respectively supporting more than one different frequency band, and a receiving/transmitting filter selector RTFS might control radio frequency filters included within said receiving branch RX and said transmitting branch TX, respectively, in receiving mode also in another way so that radio signals of a frequency band which are passed through in the receiving branch RX are blocked in the transmitting branch TX.

For example, the support of different frequency bands might be realized by way of switchable filters which passbands and stop bands are switchable instead of the selection of a respective one of several filters, in which case the filter in the transmitting branch TX is switched to have its stop band in the range of the passband of the filter in the receiving branch RX during reception.

Further, the passband and the stop band(s) of the receiving branch (RX) and the transmitting branch (TX) might be selected by way of selecting one or more serially connected filters, in which case the filters in the transmitting branch TX are switched to have their stop band in the range of the passband of the filters in the receiving branch RX during reception.

Furthermore, a combination of the above and/or other possibilities to select different bands are applicable to the invention, since the teaching of the invention to select the filters in the transmitting branch TX to have their stop band in the range of the passband of the filters in the receiving branch RX during reception can be fulfilled in all cases.

## Claims

1. A Multiband Radio System, comprising:
- a receiving branch (RX) and a transmitting branch (TX) respectively supporting more than one different frequency band, and
- a receiving/transmitting filter selector (RTFS) controlling radio frequency filters included within said receiving branch (RX) and said transmitting branch (TX). respectively,
**characterized in that**
- each of said receiving and transmitting branches (RX, TX) comprises at least two radio frequency filters (RF1, RF2; TF1, TF2) which comprise pass band and stop band functions, whereby within each of said receiving and transmitting branches (RX, TX) said pass band and stop band functions of each of said radio frequency filters (RF1, RF2; TF1, TF2) are responsible for reception/transmission of a given frequency band being different from respective frequency bands of each of the other radio frequency filters (RF1, RF2; TF1, TF2), and
- in said receiving mode the receiving branch (RX) is switched into a state for electrically connecting that radio frequency filter (RF1, RF2) being responsible for filtering radio signals of a first frequency band into its RF path, and the transmitting path (TX) is switched into a state for electrically connecting a respective other one of said radio frequency filters (TF1, TF2) being responsible for filtering radio signals of a second frequency band into its RF path.
- so that in receiving mode radio signals of a frequency band which are passed through in the receiving branch (RX) are blocked in the transmitting branch (TX).

2. The Multiband Radio System according to claim 1.
**characterized in that**
- within each of said receiving and transmitting branches (RX, TX) said radio frequency filters (RF1, RF2; TF1, TF2) are arranged in parallel and between at least one pair of multiplexer switches (RSW1, RSW2; TSW1, TSW2),
- said multiplexer switches (RSW1, RSW2; TSW1, TSW2) being actuated by means of a respective band selection signal,
- said receiving/transmitting filter selector (RTFS) receives a receive/transmit control signal (RTCS) and a primary band selection signal (BSS), and
- said receiving/transmitting filter selector (RTFS) outputting at least two secondary band selection signals (BSS1, BSS2) being inputted to each of said pairs of multiplexer switches (RSW1, RSW2; TSW1, TSW2) of a respective one of said branches (RX, TX),
- in said receiving mode of said arrangement said secondary band selection signals (BSS1; BSS2) controlling said pairs of multiplexer switches (RSW1, RSW2; TSW1, TSW2), to which they are inputted, in a way that, in a cas where a respective one of said secondary band selection signals (BSS1; BSS2) switches one of said pairs of its associated pairs of multiplexer switches (RSW1, RSW2; TSW1, TSW2) in a respective one of said branches (RX, TX) into a state for electrically connecting that radio frequency filter (RF1, RF2; TF1, TF2) being responsible for filtering radio signals of a first frequency band between said pair of multiplexer switches (RSW1, RSW2; TSW1, TSW2), at least one of the rest of said secondary band selection signals (BSS2; BSS1) switching said respective pairs of multiplexer switches (TSW1, TSW2; RSW1, RSW2) of the respective other one of said branches (TX; RX) into a state for electrically connecting the radio frequency filter (TF1, TF2; RF1, RF2) being responsible for filtering radio signals of a second frequency band between said multiplexer switches (TSW1, TSW2; RSW1, RSW2).

3. The Multiband Radio System according to claim 1 or 2,
**characterized in that**
- said receiving branch (RX) further comprises a demodulator (RSW) for downconverting a received RF signal to IF and said transmitting branch (TX) further comprises a modulator (TSW) for upconverting an IF signal to be transmitted to RF, and
- either one of said demodulator (RSW) and modulator (TSW) receives a carrier signal output from an oscillator (CS) via a receive/transmit switch (RTSW) which is actuated by a receive/transmit control signal (RTCS).

4. The Multiband Radio System according to any of claims 1 to 3,
**characterized in that**
- it is a HiperLAN or an IEEE802 system.

5. Method for operating a multiband radio system comprising a receiving branch (RX) and a transmitting branch (TX)
- said method controlling radio frequency filters included within said receiving branch (RX) and said transmitting branch (TX), respectively,
**characterized in that**
- in a receiving mode of said multiband radio system the steps of connecting, in each of said receiving and transmitting branches (RX, TX), one of at least two radio frequency filters (RF1, RF2; TF1, TF2) having a stop band function for given frequency bands, said frequency bands being different from each other, between a respective pair of at least one pair of multiplexer switches (TSW1, TSW2; RSW1, RSW2) for selecting a respective one of said radio frequency filters (RF1, RF2; TF1, TF2)
- so that in receiving mode radio signals of a frequency band which are passed through in the receiving branch (RX) are blocked in the transmitting branch (TX).

## Patentansprüche

1. Mehrbandfunksystem mit:
- einem Empfangszweig (RX) und einem Sendezweig (TX), die jeweils mehr als ein verschiedenes Frequenzband unterstützen und
- einer Empfangs-/Sende-Filterauswahleinrichtung (RTFS), welche Funkfrequenzfilter, die innerhalb des Empfangszweigs (RX) und des Sendezweigs (TX) enthalten sind, steuert,
**dadurch gekennzeichnet, dass**
- jeder der Empfangs- und Sendezweige (RX, TX) wenigstens zwei Funkfrequenzfilter (RF1, RF2; TF1, TF2) aufweist, die Durchlassbereichs- und Sperrbereichsfunktionen aufweisen, wobei innerhalb jeder der Empfangs- und Sendezweige (RX, TX) die Durchlassbereichs- und Sperrbereichsfunktionen jedes Funkfrequenzfilters (RF1, RF2; TF1, TF2) für den Empfang/das Senden eines gegebenen Frequenzbandes, das von den jeweiligen Frequenzbändern von jedem der anderen Frequenzfilter (RF1, RF2; TF1, TF2) verschieden ist, verantwortlich sind, und
- der Empfangszweig (RX) im Empfangsmodus in einen Zustand geschaltet wird, um den Funkfrequenzfilter (RF1, RF2), dem das Filtern von Funksignalen eines ersten Frequenzbandes obliegt, elektrisch in dessen RF-Pfad zu schalten, und der Sendepfad (TX) wird in einen Zustand geschaltet, um einen jeweils anderen der Funkfrequenzfilter (TF1, TF2), dem das Filtern von Funksignalen eines zweiten Frequenzbandes obliegt, elektrisch in dessen RF-Pfad zu schalten,
- so dass im Empfangsmodus Funksignale eines ersten Frequenzbandes, die durch den Empfangszweig (RX) hindurchgelassen werden, im Sendezweig (TX) gesperrt werden.

2. Mehrbandfunksystem nach Anspruch 1,
**dadurch gekennzeichnet, dass**
- die Funkfrequenzfilter (RF1, RF2; TF1, TF2) innerhalb von jedem der Empfangs- und Sendezweige (RX, TX) parallel und zwischen wenigstens einem Paar von Multiplexerschaltern (RSW1, RSW2; TSW1. TSW2) angeordnet sind,
- die Multiplexerschalter (RSW1, RSW2; TSW1, TSW2) mit Hilfe eines entsprechenden Bandauswahlsignals angesteuert werden,
- die Empfangs-/Sende-Filterauswahleinrichtung (RTFS) ein Empfangs-/Sendesteuersignal (RTCS) und ein primäres Bandauswahlsignal (BSS) empfängt und
- diese Empfangs-/Sende-Filterauswahleinrichtung (RTFS) wenigstens zwei sekundäre Bandauswahlsignale (BSS1, BSS2) ausgibt, welche jedem der Paare von Multiplexerschaltern (TSW1, RSW2; TSW1, TSW2) von einem der Zweige (RX, TX) eingespeist werden,
- die sekundären Bandauswahlsignale (BSS1; BSS2) im Empfangsmodus der Anordnung die Paare von Multiplexerschaltern (RSW1, RSW2; TSW1, TSW2), denen diese eingespeist werden, auf eine solche Weise steuern, dass in einem Falle, in dem eines der sekundären Bandauswahlsignale (BSS1; BSS2) eines der Paare der zugehörigen Paare von Multiplexerschaltern (RSW1, RSW2; TSW1, TSW2) in einem der Zweige (RX, TX) in einen Zustand zum elektrischen Anschließen des Funkfrequenzfilters (RF1, RF2; TF1, TF2), dem ein Filtern von Funkfrequenzsignalen eines ersten Frequenzbandes obliegt, zwischen das Paar von Multiplexerschaltern (RSW1, RSW2; TSW1, TSW2) schaltet, wenigstens eines der verbleibenden sekundären Bandauswahlsignale (BSS2; BSS1) die entsprechenden Paare von Multiplexerschaltern (TSW1, TSW2; RSW1, RSW2) des jeweils anderen Zweigs (TX; RX) in einen Zustand zum elektrischen Anschließen des Funkfrequenzfilters (TF1, TF2; RF1, RF2), dem ein Filtern von Funksignalen eines zweiten Frequenzbandes obliegt, zwischen die Multiplexerschalter (TSW1, TSW2; RSW1, RSW2) schaltet.

3. Mehrbandfunksystem nach Anspruch 1 oder 2,
**dadurch gekennzeichnet, dass**
- der Empfangszweig (RX) zusätzlich einen Demodulator (RSW) zum Abwärtskonvertieren eines empfangenen RF Signals nach IF aufweist und der Sendezweig (TX) zusätzlich einen Modulator (TSW) zum Aufwärtskonvertieren eines IF Signals nach RF aufweist, und
- ein Element aus Demodulator (RSW) und Modulator (TSW) eine Trägersignalausgabe von einem Oszillator (CS) über einen Empfangs-/Sendeschalter (RTSW), welcher über das Empfangs-/Sendesteuersignal (RTCS) angesteuert wird, empfängt.

4. Mehrbandfunksystem nach einem der Ansprüche 1 bis 3,
**dadurch gekennzeichnet, dass**
- dieses ein HiperLAN oder ein IEEE802 System ist.

5. Verfahren zum Betreiben eines Mehrbandfunksystems mit einem Empfangszweig (RX) und einem Sendezweig (TX), wobei
- das Verfahren Radiofrequenzfilter, welche jeweils innerhalb des Empfangszweiges (RX) und des Sendezweiges (TX) enthalten sind, ansteuert,
**dadurch gekennzeichnet, dass**
- in einem Empfangsmodus des Mehrbandfunksystems die Schritte Anschließen, in jedem der Empfangs- und Sendezweige (RX, TX), von wenigstens zwei Funkfrequenzfiltern (RF1, RF2; TF1, TF2) mit einer Bandsperrfunktion für gegebene und voneinander verschiedene Frequenzbänder zwischen ein Paar von wenigstens einem Paar von Multiplexerschaltern (TSW1, TSW2; RSW1, RSW2) erfolgen zum Auswählen von einem der Funkfrequenzfilter (RF1, RF2; TF1, TF2),
- sodass in einem Empfangsbetrieb Funksignale eines Frequenzbandes, die den Empfangszweig (RX) passiert haben, im Sendezweig (TX) gesperrt werden.

## Revendications

1. Système radioélectrique multibande, comprenant :
- une branche de réception (RX) et une branche d'émission (TX) supportant respectivement plus d'une bande de fréquence différente, et
- un sélecteur de filtre de réception/d'émission (RFTS) qui commande des filtres de fréquences radioélectriques inclus à l'intérieur de ladite branche de réception (RX) et ladite branche d'émission (TX), respectivement,
**caractérisé en ce que**
- chacune desdites branches de réception et d'émission (RX, TX) comprend au moins deux filtres de fréquences radioélectriques (RF1, RF2; TF1, TF2), qui comprennent des fonctions de bande passante et de bande d'arrêt, moyennant quoi à l'intérieur de chacune desdites branches de réception et d'émission (RX, TX), lesdites fonctions de bande passante et de bande d'arrêt de chacun desdits filtres de fréquences radioélectriques (RF1, RF2; TF1, TF2) sont responsables d'une réception/d'une émission d'une bande de fréquence donnée différente des bandes de fréquences respectives de chacun des autres filtres de fréquences radioélectriques (RF1, RF2 ; TF1, TF2), et
- dans ledit mode de réception, la branche de réception (RX) est commutée dans un état destiné à raccorder électriquement ce filtre de fréquence radioélectrique (RF1, RF2) responsable du filtrage des signaux radioélectriques d'une première bande de fréquence dans sa voie RF, et la branche d'émission (TX) est commutée dans un état destiné à raccorder électriquement un autre respectif parmi lesdits filtres de fréquences radioélectriques (TF1, TF2) responsables du filtrage de signaux radioélectriques d'une seconde bande de fréquence dans sa voie RF,
- de sorte qu'en mode réception, des signaux radioélectriques d'une bande de fréquence qui sont passés à travers la branche de réception (RX) soient bloqués dans la branche d'émission (TX).

2. Système radioélectrique multibande selon la revendication 1,
**caractérisé en ce que**
- à l'intérieur de chacune desdites branches de réception d'émission (RX, TX), lesdits filtres de fréquences radioélectriques (RF1, RF2 ; TF1, TF2) sont agencés en parallèle et entre au moins une paire de commutateurs multiplexeurs (RSW1, RSW2 ; TSW1, TSW2),
- lesdits commutateurs multiplexeurs (RSW1, RSW2 ; TSW1, TSW2) sont actionnés au moyen d'un signal de sélection de bande respectif,
- ledit sélecteur de filtre de réception/d'émission (RTFS) reçoit un signal de commande de réception/d'émission (RTCS) et un signal de sélection de bande primaire (BSS), et
- ledit sélecteur de filtre de réception/d'émission (RTFS) sort au moins deux signaux de sélection de bande secondaires (BSS1, BSS2) entrés dans chacune desdites paires de commutateurs multiplexeurs (RSW1, RSW2 ; TSW1, TSW2) d'une respective parmi lesdites branches (RX, TX),
- dans ledit mode de réception dudit agencement, lesdits signaux de sélection de bande secondaires (BSS1, BSS2) commandent lesdites paires de commutateurs multiplexeurs (RSW1, RSW2; TSW1, TSW2), dans lesquels ils sont entrés, de façon à ce que, dans un cas où un respectif parmi lesdits signaux de sélection de bande secondaires (BSS1, BSS2) commutent une desdites paires associées de commutateurs multiplexeurs (RSW1, RSW2 ; TSW1, TSW2) dans une respective parmi lesdites branches (RX, TX) dans un état destiné à raccorder électriquement ce filtre de fréquence radioélectrique (RF1, RF2; TF1, TF2) responsable du filtrage de signaux radioélectriques d'une première bande de fréquence entre ladite paire de commutateurs multiplexeurs (RSW1, RSW2 ; TSW1, TSW2), au moins un parmi le reste desdits signaux de sélection de bande secondaire (BSS2, BSS1) commutent lesdites paires respectives de commutateurs multiplexeurs (TSW1, TSW2; RSW1, RSW2) de l'autre respective parmi lesdites branches (TX; RX) dans un état destiné à raccorder électriquement le filtre de fréquence radioélectrique (TF1, TF2; RF1, RF2) responsable du filtrage de signaux radioélectriques d'une seconde bande de fréquence entre lesdits commutateurs multiplexeurs (TSW1, TSW2 ; RSW1, RSW2).

3. Système radioélectrique multibande selon la revendication 1 ou 2,
**caractérisé en ce que**
ladite branche de réception (RX) comprend en outre un démodulateur (RSW) destiné à convertir par abaissement de fréquence un signal RF reçu en signal de fréquence intermédiaire (FI) et ladite branche d'émission (TX) comprend en outre un modulateur (TSW) destiné à convertir par élévation de fréquence un signal FI à transmettre en signal RF, et
- l'un ou l'autre parmi ledit démodulateur (RSW) et ledit modulateur (TSW) reçoit un signal porteur sorti par un oscillateur (CS) via un commutateur de réception/d'émission (RTSW) qui est actionné par un signal de commande de réception/d'émission (RTCS).

4. Système radioélectrique multibande selon l'une quelconque des revendications 1 à 3,
**caractérisé en ce que**
- le système radioélectrique multibande est un système HiperLAN ou un système IEEE802.

5. Procédé destiné à faire fonctionner un système radioélectrique multibande comprenant une branche de réception (RX) et une branche d'émission (TX)
- ledit procédé commandant des filtres de fréquence radioélectriques respectivement inclus à l'intérieur de ladite branche de réception (RX) et ladite branche d'émission (TX),
**caractérisé en ce que**
- dans un mode réception dudit système radioélectrique multibande, le procédé comprend une étape consistant à raccorder, dans chacune desdites branches de réception et d'émission (RX, TX), un parmi au moins deux filtres de fréquences radioélectriques (RF1, RF2 ; TF1, TF2) ayant une fonction de bande d'arrêt pour des bandes de fréquences données, lesdites bandes de fréquences étant différentes les unes des autres, entre une paire respective d'au moins une paire de commutateurs multiplexeurs (TSW1, TSW2 ; RSW1, RSW2) pour sélectionner un respectif parmi lesdits filtres de fréquences radioélectriques (RF1, RF2 ; TF1, TF2),
- de sorte qu'en mode réception, des signaux radioélectriques d'une bande de fréquence qui sont passés à travers la branche de réception (RX) soient bloqués dans la branche d'émission (TX).
